# EUROPEAN PATENT SPECIFICATION

(11) **EP 3 002 452 B1**
(45) Date of publication and mention of the grant of the patent: **24.07.2019**
(21) Application number: 15188437.6
(22) Date of filing: 05.10.2015
(51) Int. Cl.: F03D 1/06

(54) **A WIND TURBINE BLADE**
WINDTURBINENSCHAUFEL
PALE D'EOLIENNE

(30) Priority: 05.10.2014 NL 2013574; 15.01.2015 NL 2014140
(43) Date of publication of application: 06.04.2016
(73) Proprietor: Pontis Group Holding B.V., 1019 GM Amsterdam (NL)
(72) Inventor: VAN BREUGEL, Sjef, 1019GM Amsterdam (NL); ELLAM, Darren, 1019 GM Amsterdam (NL)
(74) Representative: Plaggenborg, Menko Bernard

(56) References cited:
- GB-A- 2 481 415
- US-A1- 2007 036 653
- US-A1- 2008 107 540

## Description

The present invention relates to a wind turbine blade according to the preamble of claim 1. More in particular, the present invention relates to edge design of a wind turbine blade that is tolerant to damage and is prevented from buckling due to extreme loads. The term "edge design" relates to the design concept applied at the trailing edge (TE) and/or leading edge (LE).

It is known in the art to have a wind turbine blade designed such that it is less prone to buckling failure under extreme loads. In the art, the term "extreme load" refers to loads that may only be encountered once in a lifetime, which is typically 20 to 25 years. For example, international patent application WO2011/088834 describes a wind turbine blade that has been designed to provide benignly buckling of the trailing edge when the blade is subjected to extreme reverse edgewise loading so as to prevent blade failure.

According to the present invention, blade buckling is defined as an instability that leads to a sudden failure of the blade due to high compressive stress caused by blade bending. This is most likely to be instigated locally through the mechanism of trailing edge buckling (also known as knife edge buckling), shell panel buckling, or spar (either spar cap or spar web) buckling.

Blade buckling strength is an increasingly difficult requirement to meet considering the demand and trend for larger blade sizes. To achieve a certified blade design, international guideline requirements need to be satisfied. Adding additional material and structure to solely meet buckling design margins leads to a less cost effective blade design. As such, in the art of blade design, buckling can often be a significant design and cost driver.

Tendency of most blade manufacturers is to offer a wind turbine blade that will not buckle at all, either benignly. Reason for this is that buckling is likely to destroy the wind turbine blade at least partially. The presently available blades need to be taken out of service and replaced when such failure occurs, at significant cost. Worst still the whole turbine may need to be taken out of service and replaced.

An example of a publication relating to a wind turbine design according to the state of the art as mentioned in the preamble of claim 1 is US 2007/036653 in the name of Dan C. Bak et al. This publication describes a wind turbine blade including spar sections which are located near the leading and trailing edges of the turbine blade, and wherein edge components are aligned with the main section so as to form an aerodynamic profile and wherein the edge components have a lower stiffness than the main section of the blade. Another example of such known wind turbine design is disclosed in GB 2481415 in the name of Vestas Wind Sys AS. That publication relates to a wind turbine blade comprising a central spar and additional spars, further comprising leading and trailing edge components that extend outwardly from the spars. Outer edge sections of the wind turbine blade have a lower stiffness than the section that is supported by the central spar.

The invention aims at providing an improved blade design that is less prone to buckling failure due to extreme loads and/or edge damage. The invention especially aims at providing a blade design in which buckling is not a limiting design driver, allowing for a more optimised blade design.

The invention further aims at providing a blade design that allows the blade to continue safe operation even if some edge wear or damage has occurred.

So as to obtain at least one of the above mentioned aims, the invention provides a wind turbine blade comprising an aerodynamic shell that extends between a leading edge and a trailing edge, wherein said shell is comprised of a windward shell and a leeward shell, said shell comprising composite sandwich panels to support localised loading and a spar system to provide local rigidity to the blade and to transfer the accumulated load to the blade root. This wind turbine blade according to the invention is characterized in that it is comprised of [a] an edge spar at either leading edge and trailing edge of the blade, and [b] from said edge spar at either leading edge and trailing edge of the blade, an edge component, having it's leeward surface aligned with and adjacent to said blade's leeward shell, and its windward surface, aligned with and adjacent to said blade's windward shell, so as to provide a continuous aerodynamic shell; said edge component having a lower rigidity than the blade's main structure, and wherein at a position of the edge component, at least one of said windward shell and said leeward shell are bent towards one another, forming a contact surface for connecting said edge component. This wind turbine blade has the advantage that edge buckling under extreme loads is not a design driver, as edge buckling is designed not to occur. According to the invention, at the position of the edge component, at least one of said windward shell and said leeward shell are bent towards one another, such that said bent end or ends, respectively, do not form part of the aerodynamic shell, and more preferably further such that said bent end or ends, respectively, form said edge spar. This embodiment provides the advantage that a separate rear spar does not need to be connected to said shells. The core material of said edge spar may consist of a high stiffness to carry bending loads, the skins of said edge spar would carry the shear loads.

Special preference is given to a blade, wherein said edge spar is embodied for supporting and carrying loads down the blade length towards the root. This especially relates to loads acting upon the blade's edge. Since the edge spar forms part of the main section of the wind turbine blade, any forces acting upon it are transferred in the direction of the blade root. As known in the art, the root is the part of the blade that is connected to the hub of the wind turbine. Furthermore, the edge spar is designed such that buckling will not occur. The edge spar provides additional strength though the fact that the main shells are short in length.

It is preferred in the blade according to the invention that said edge component is comprised of any of a foam material, a honeycomb material or a combination thereof. Each thereof providing a lightweight yet sufficiently dimensionally stable material to be used in the present invention.

It is furthermore preferred that said edge component is comprised of a low elastic modulus material, providing the advantage that it easily withstands damage due to loads, acting upon the blade's edge.

It is especially preferred that said edge component has a relatively low rigidity, and wherein the main structure and spar system have a respectively relatively high rigidity for carrying the main blade loads, since such has shown to provide a blade that is much less prone to buckling of the edge component.

The invention further relates to a wind turbine blade wherein said edge component comprises a relatively low structural stiffness with respect to the said main blade section. Said main blade section embodies main spar and edge spar that are comprised of high stiffness and high strength structural materials. This way, all load that is exerted on the blade during use, is carried to the blade root by the main spar and edge spars, whereas the edge component need withstand local loading only. In essence, the main edge load carrying structure is moved further inwards (towards the pitch axis) than is typical in state of the art, and the immediate blade edge profiles are replaced with a light weight structure parts with strength to support only the local aerodynamic loads.

In the art, moving the main edge load carrying material towards the pitch axis is actually a less mass efficient way of obtaining the required blade edge stiffness. However, it can be shown with the present invention, when considering that buckling strengths previously difficult to achieve are now attainable, this compromise results in no net gain in mass, in fact a saving is expected. The reason for this is considering the continued trend towards longer blade lengths, in which ever increasingly difficult to attain edge load strengths, are now obtainable with the present invention. Since blade mass is a significant turbine design and cost drive, such a synergistic advantage leads to more efficient energy generation.

An additional advantage is found in the ease with which damaged or worn parts can be replaced, for example after prolonged operation in extreme weather conditions, since only a modular edge component needs to be replaced. Furthermore, since the edge components are not designed to add to the blade's constructional strength, the wind turbine does not need to be taken out of service when some wear or damage on either LE or TE occurs. Operation can be safely continued. Such is an advantage over the wind turbines according to the state of the art.

Further advantages for a wind turbine blade according to the present invention, over that of state of the art, is that smaller size parts are manufactured and glued or otherwise mutually connected. This essentially involves combining the main blade section with a LE and/or a TE component. This allows the option if preferred to assemble the blade on site which would aid transportation. Additionally, manufacturing the main blade section using a mould of smaller size would lead to cost savings. Furthermore the edge components, that are the most aerodynamically critical, are now separate smaller pieces, that could now be manufactured more precisely than following generic state of the art methods.

According to the invention, for providing a contact surface for connecting the edge component to the blade's main body, at a position of the edge component, at least one of said windward shell and said leeward shell are bent towards one another, forming a contact surface for connecting said edge component.

Preferably, in the wind turbine blade according to the present invention, at the position of the edge component, additional bends of the main shell structure, in the chord direction form a ridge, and wherein said edge component comprises a recess for receiving said ridge. This way, by locking up said ridges inside said recess, a connection of said windward shell, leeward shell and edge component is obtained.

Said edge component may for example be connected to said edge spar by means of gluing, clipping or any other suitable means. If preferred, connection of said edge component to said edge spar can be by means of a removable connection, but a permanent connection will also suffice. For example, at said ridge which mutually receives said recess, a clip on connection or other removable connection can be used. A further connecting means for thoroughly connecting said edge component is preferably provided, so as to manufacture a wind turbine blade having an aerodynamic shell smoothly running from LE to TE, both at the windward side and the leeward side.

It is preferred that said edge component comprises a closed surface, providing a smooth and substantially airtight surface layer. Especially when said edge component is comprised of a foam material, such smooth and airtight surface is highly preferred. Preferably this closed surface is a material skin that would give sufficient torsional stiffness to the edge component to support aerodynamic loads.

The invention relates to a wind turbine blade as mentioned above, wherein said blade edge spar is embodied for supporting and carrying loads down the blade length towards the blade root.

The invention relates to a wind turbine blade as mentioned above, wherein said edge component is comprised of any of a foam material, a honeycomb material or a combination thereof.

The invention relates to a wind turbine blade as mentioned above, wherein said edge component is comprised of a low elastic modulus material.

The invention relates to a wind turbine blade as mentioned above, wherein said edge component has a relatively low rigidity, and wherein the main structure and spar system have a relatively high rigidity for carrying the main blade loads.

The invention relates to a wind turbine blade as mentioned above, wherein at the position of the edge component, at least one of said windward shell and said leeward shell are bent towards one another.

The invention relates to a wind turbine blade as mentioned above, wherein at a position of the edge component, at least one of said windward shell and said leeward shell are bent towards one another, forming a contact surface for connecting said edge component.

The invention relates to a wind turbine blade as mentioned above, wherein at the position of the edge component, additional bends of the main shell structure, in the chord direction form a ridge, and wherein said edge component comprises a recess for receiving said ridge.

The invention relates to a wind turbine blade as mentioned above, wherein said edge component is connected to said edge spar by means of gluing, clipping or any other suitable method.

The invention relates to a wind turbine blade as mentioned above, said edge component is a closed surface.

Hereafter, the invention will be further described by means of a drawing. The drawing shows in:
Fig. 1 a cross-section view of a wind turbine blade according to the state of the art,
Fig. 2 a cross-section view of a wind turbine blade according to the invention,
Fig. 3 and 4 a method of manufacturing a wind turbine blade according to an embodiment of the present invention, and
Fig. 5 and 6 an impression of TE buckling in a blade according to the state of the art and according to the invention, respectively.

The same and similar parts and features have been denoted by the same reference numerals in the figures. However, for ease of understanding the figures, not all parts that are required for a practical embodiment have been shown in the figures.

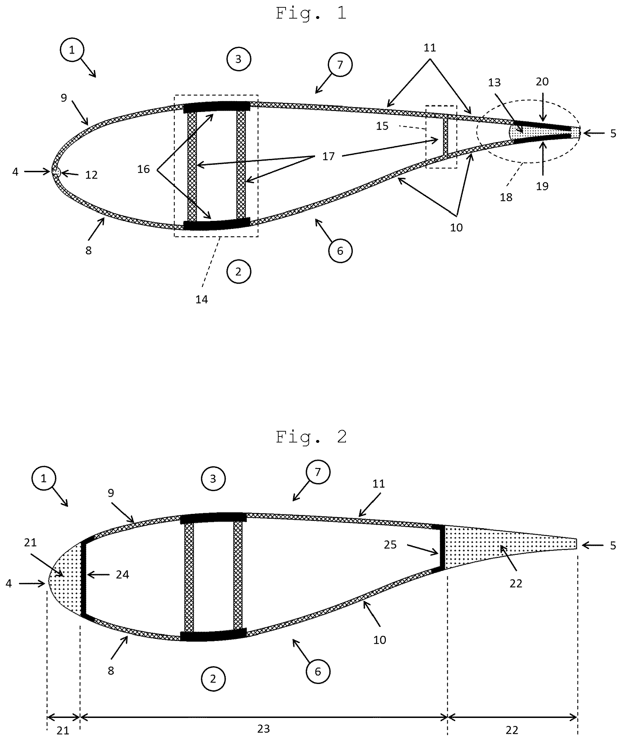

Fig. 1 shows a simplified perspective cross-section of a wind turbine blade 1. As a matter of fact, Fig. 1 components have not been depicted in proportion. The blade 1 has a windward side 2 and a leeward side 3. Both sides 2, 3 extend between a leading edge LE 4 and a trailing edge TE 5. Said sides extending between said LE 4 and TE 5 are referred to as windward shell 6, leeward shell 7 and are both often manufactured as separate complete pieces. Said shells 6, 7 form an aerodynamic profile, running substantially smoothly between LE 4 and TE 5. Said shells are largely composed of composite sandwich panels 8, 9, 10, 11 which are lightweight yet can withstand localised loading. Windward shell 6 and leeward shell 7 are coupled through an adhesive 12 at LE 14 and an adhesive 13 at TE 5.

As known in the art, the blade 1 uses a spar system 14 which functions as the main structural member withstanding and transferring load to the blade root. Said spar also functions as a reinforcing member for supporting windward shell 6 and leeward shell 7. As well as the main spar 14, additional spars (i.e. TE spar 15) can be used, and is more typical on larger blade sections. Said spars (i.e. 14, 15) can be subdivided into separate components, spar caps 16 and spar webs 17 (also known as a shear webs). Said spar cap 16 is primarily designed to support loads caused by bending, and is usually constructed from unidirectional glass or carbon composite material. Said spar web 17 is primarily designed to transfer shear load, and is usually a glass composite sandwich panel construction.

The TE component 18 starts from the TE 5 and is of unstipulated length (but could be considered about 10% of chord length). This TE component 18 and TE panels 10, 11 are prone to buckling under compressive edgewise loads of blade 1. To prevent this, strains are reduced by increasing overall blade edgewise stiffness. This can be achieved by utilizing a TE windward stiffener 19, and TE leeward stiffener 20. The material of said TE stiffeners 19, 20 is usually unidirectional glass or carbon composite.

Due to the construction method according to the state of the art, when blade buckling occurs, failure of either said LE bonding 12 or more usually TE bonding 13, between said shells 6, 7, often leads to catastrophic failure of the blade 1.

According to an embodiment of the state of the art, the edge stiffness of said blade 1 is kept sufficiently high, so as to prevent buckling as much as possible. According to another state of the art where a rear spar web 15 has been applied, especially WO2011/088834, stiffness of constructional parts 18 is such that some benign buckling is allowed under certain loads.

Fig. 2 shows a simplified perspective cross-section of a wind turbine blade 1 according to the present invention. As a matter of fact, components in Fig. 2 have not been depicted in proportion.

The LE edge component 21 and/or TE edge component 22 is manufactured such that its structural stiffness and thus rigidity is low relative to that of the main blade section 23. Said edge part 21, 22 is able to support all aerodynamic loads and blade strains, under nominal operating conditions of wind turbine blade 1, such as to provide and maintain the required aerodynamic profile within a required tolerance.

According to a further embodiment, said edge component is comprised of low elastic modulus material. As such, a preferred material for manufacturing the edge component would be foam or honeycomb material or a combination thereof. For example, an elastic modulus of the order of 100 to 1000 MPa (N/m2) is anticipated to be preferred.

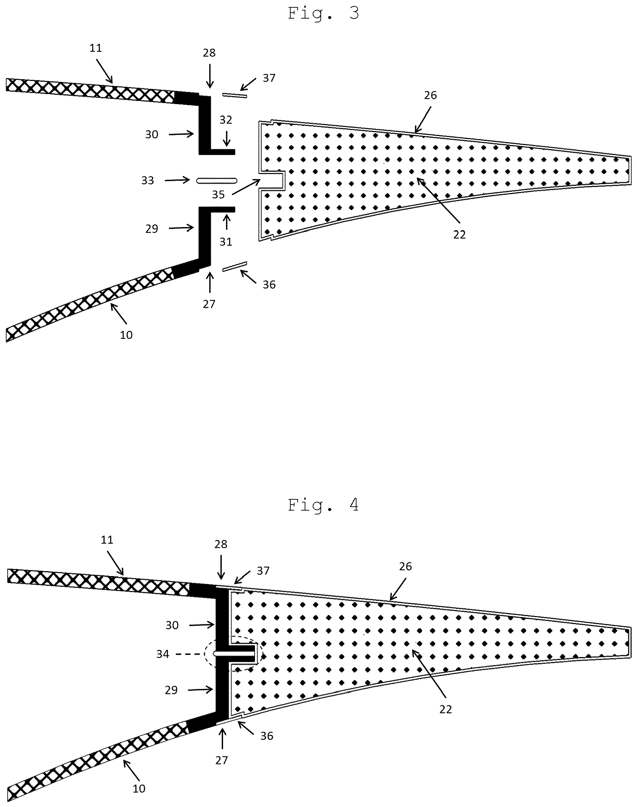

It is preferred that said edge component comprises a closed surface 26, as indicated in Fig. 3 and Fig. 4. Additionally, this closed surface 26 is preferably a thin skin adding some torsional stiffness to the edge component.

Said edge part 21, 22 is connected to the main blade part 23 at edge spar 24, 25 respectively. Said edge spar 24, 25 provides a stiff constructional box to the main blade section 23. Since the edge spars 24, 25 are an integral part of the main blade shell, any forces acting upon it are distributed and transferred in the direction of the blade root.

Said edge spar 24, 25 is to be constructed of sufficiently stiff material to maintain the required edgewise stiffness of blade 1. As a matter of fact, edge components 21, 22 are designed such that they do not add any significant edgewise stiffness to the blade. The core material of edge spar 24, 25 would include unidirectional glass or carbon composite to add the blades overall edgewise stiffness. Whereas the outer skin surface material of edge spar 24, 25 would be a biaxial glass composite, as a matter of fact it would be of similar layup of that used to make composite panels 8, 9, 10, 11. The said edge spar is designed rigidly enough such that it will not buckle locally.

Since the shell panels 8, 9, 10, 11 can be relatively short compared to state of the art, the thickness of which can be smaller while still maintaining required panel strength. This will help to decrease the total weight of the wind turbine blade according to the present invention.

Fig. 3 and Fig. 4 show a preferred way of manufacturing the wind turbine blade 1 according to the present invention. As a matter of fact, Fig. 3 and Fig. 4 components have not been depicted in proportion. The method shown in Fig. 3 and Fig. 4 is for the TE 22 but, as a matter of fact, the concept applies to the LE 21 also. In the embodiment shown, at position 27, 28 on the main section edge, parts 29, 30 of windward shell 10 and leeward shell 11, respectively are bent out of aerodynamic plane towards each other. Said bent shape may be manufactured directly, but some small slope (say 5 degrees) can be maintained to aid de-moulding. A further bend directed towards trailing edge 5, at the ends of said parts 29, 30 forms ridges 31, 32.

When connecting the ends of parts 29, 30, for example by means of an adhesive 33 that connects ridges 31, 32, windward shell 6 and leeward shell 7 are connected. This connection forms a rib 34 on said edge spar 24, 25. Said rib 34 adds to the strength of the said edge spar 24, 25. Said parts 29, 30 hence form TE edge spar 25. Edge component 21, 22 is preferably connected to said edge spar 24, 25 by means of a non-permanent connection, and inserting mutually connected ridges 31, 32 into a recess 35 provided in said TE part 22.

Recess 35 may be dimensioned such that rib (also called ridge) 34 is inserted substantially in close fitting, which eases alignment of edge part 21, 22 with respect to the main part 23 of blade 1.

To add to connection strength, maintain a smooth aerodynamic surface, and to aid quick removal of edge part 21, 22, a windward strip 36 and leeward strip 37 is envisaged as shown in Fig. 3. This strip may be connected by means of bolts or the like, or could even be a strong adhesive tape.

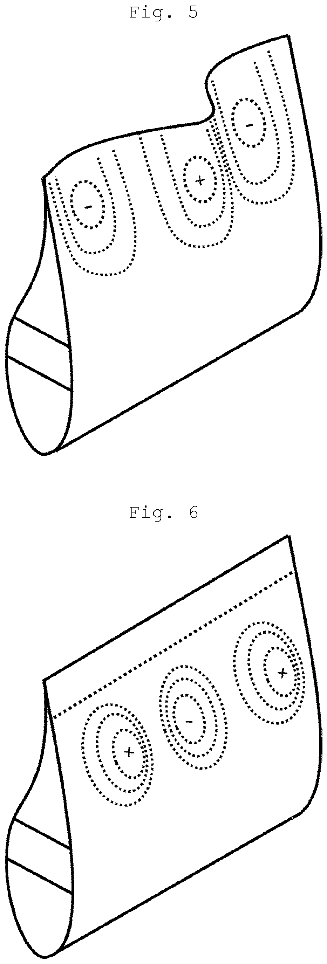

Due to the inherent low structural strength of the edge component compared to that of the main structure, it has been shown that edgewise buckling (Fig. 5) as in current state of the art does not occur in the present invention. Instead panel buckling (Fig. 6) at a higher load occurs. In the present invention under extreme load the edge component is designed such that it can lose its aerodynamic shape. The edge component thus does not buckle, either benignly, or otherwise. Instead it conforms to a shape though elastic deformation to that dictated by the main blade structure.

The invention is not limited to the embodiments as mentioned above and as shown in the drawings. The invention is limited by the claims only.

## Claims

1. A wind turbine blade (1) comprising an aerodynamic shell that extends between a leading edge (4) and a trailing edge (5), wherein said shell is comprised of a windward shell (6) and a leeward shell (7), said shell (6, 7) comprising composite sandwich panels (8, 9, 10, 11) to support localised loading and a spar system (14, 15) to provide local rigidity to the blade and to transfer the accumulated load to the blade root,
wherein said wind turbine blade is comprised of
[a] an edge spar (24, 25) at either leading edge (4) and trailing edge (5) of the blade, and
[b] from said edge spar at either leading edge (4) and trailing edge (5) of the blade, an edge component (21, 22), having it's leeward surface aligned with and adjacent to said blade's leeward shell, and its windward surface, aligned with and adjacent to said blade's windward shell, so as to provide a continuous aerodynamic shell;
said edge component (21, 22) having a lower rigidity than the blade's main structure (23),
**characterized in that**
at a position of the edge component (21, 22), at least one of said windward shell (6) and said leeward shell (7) are bent towards one another, forming a contact surface for connecting said edge component (21, 22).

2. A wind turbine (1) blade according to claim 1, wherein said blade edge spar (24, 25) is embodied for supporting and carrying loads down the blade length towards the blade root.

3. A wind turbine blade (1) according to claims 1 and 2, wherein said edge component (21, 22) is comprised of any of a foam material, a honeycomb material or a combination thereof.

4. A wind turbine blade (1) according to any of the preceding claims, wherein said edge component (21, 22) is comprised of a low elastic modulus material.

5. A wind turbine blade (1) according to any of the preceding claims, wherein said edge component (21, 22) has a relatively low rigidity, and wherein the main structure and spar system have a relatively high rigidity for carrying the main blade loads.

6. A wind turbine blade (1) according to any of the preceding claims, wherein at the position of the edge component (21, 22), at least one of said windward shell (6) and said leeward shell (7) are bent towards one another.

7. A wind turbine blade (1) according to any of the preceding claims, wherein at the position of the edge component (21, 22), additional bends of the main shell structure, in the chord direction form a ridge (31, 32), and wherein said edge component (21, 22) comprises a recess (35) for receiving said ridge (31, 32).

8. A wind turbine blade (1) according to any of the preceding claims, wherein said edge component (21, 22) is connected to said edge spar (24, 25) by means of gluing, clipping or any other suitable method.

9. A wind turbine blade (1) according to any of the preceding claims, said edge component (21, 22) is a closed surface.

## Patentansprüche

1. Windturbinenblatt (1), welches eine aerodynamische Hülle umfasst, die sich zwischen einer Anströmkante (4) und einer Abströmkante (5) erstreckt, worin die Hülle eine Luv-seitige Hülle (6) und eine Lee-seitige Hülle (7) umfasst, worin die Hülle (6, 7) Komposit-Sandwichplatten (8, 9, 10, 11) umfasst, um örtliche Lasten zu tragen, und ein Holmsystem (14, 15), um dem Blatt lokale Festigkeit zu verleihen und um die kumulierte Last auf den BlattFuss zu übertragen,
worin das Windturbinenblatt umfasst:
[a] einen Randholm (24, 25) sowohl an Anströmkante (4) als auch an der Abströmkante
(5) des Blattes, und
[b] eine Randkomponente (21, 22) von dem Randholm sowohl an Anströmkante (4) als auch an Abströmkante (5) des Blattes, deren Lee-seitige Oberfläche mit und benachbart zu der Lee-seitigen Blatthülle ausgerichtet ist, und deren Luv-seitige Oberfläche mit und benachbart zu der Luv-seitigen Blatthülle ausgerichtet ist, um eine durchgehende aerodynamische Hülle bereitzustellen;
worin die Randkomponente (21, 22) eine geringere Festigkeit aufweist, als die Hauptstruktur des Blattes (23),
**dadurch gekennzeichnet, dass**
an einer Position der Randkomponente (21, 22), mindestens eines von der Luv-seitigen Hülle (6) und der Lee-seitigen Hülle (7) zueinander gekrümmt ist, wodurch eine Kontaktoberfläche zum Verbinden mit der Randkomponente (21, 22) ausgebildet ist.

2. Windturbinenblatt (1) nach Anspruch 1, worin der Blattrandholm (24, 25) zum Unterstützen und um Lasten die Blattlänge herunter zu der Blattwurzel zu tragen ausgeführt ist.

3. Windturbinenblatt (1) nach Anspruch 1 und 2, worin die Randkomponente (21, 22) eines umfasst von einem Schaummaterial, einem Bienenwabenmaterial oder einer Kombination davon.

4. Windturbinenblatt (1) nach einem der vorstehenden Ansprüche, worin die Randkomponente (21, 22) ein Material mit einem niedrigen Elastizitätsmodul umfasst.

5. Windturbinenblatt (1) nach einem der vorstehenden Ansprüche, worin die Randkomponente (21, 22) eine relativ geringe Festigkeit aufweist, und worin die Hauptstruktur und das Holmsystem eine relativ hohe Festigkeit aufweisen, um die Haupt-Blattlasten zu tragen.

6. Windturbinenblatt (1) nach einem der vorstehenden Ansprüche, worin an der Position der Randkomponente (21, 22), mindestens eine der Luv-seitigen Hülle (6) und der Lee-seitigen Hülle (7) zueinander gekrümmt ist.

7. Windturbinenblatt (1) nach einem der vorstehenden Ansprüche, worin an der Position der Randkomponente (21, 22) zusätzliche Biegungen des Haupthüllenaufbaus in der Blattrichtung eine Rippe (31, 32) ausbilden, und worin die Randkomponente (21, 22) eine Aussparung (35) umfasst, um die Rippe (31, 32) aufzunehmen.

8. Windturbinenblatt (1) nach einem der vorstehenden Ansprüche, worin die Randkomponente (21, 22) mit dem Randholm (24, 25) mittels Kleben, Klemmen oder durch jedes andere geeignete Verfahren verbunden ist.

9. Windturbinenblatt (1) nach einem der vorstehenden Ansprüche, worin die Randkomponente (21, 22) eine geschlossene Oberfläche ist.

## Revendications

1. Pale d'éolienne (1) comprenant une coque aérodynamique qui s'étend entre un bord d'attaque (4) et un bord de fuite (5), ladite coque étant constituée d'une coque face au vent (6) et d'une coque sous le vent (7), ladite coque (6, 7) comprenant des panneaux sandwich composites (8, 9, 10, 11) pour supporter une charge localisée et un système de longeron (14, 15) pour conférer une rigidité locale à la pale et transférer au pied de pale la charge accumulée,
ladite pale d'éolienne étant constituée de
[a] un longeron de bord (24, 25) à chacun du bord d'attaque (4) et du bord de fuite (5) de la pale, et
[b] à partir dudit longeron de bord à chacun du bord d'attaque (4) et du bord de fuite (5) de la pale, un composant de bord (21, 22) ayant sa surface sous le vent alignée avec et adjacente à ladite coque sous le vent de la pale, et sa surface face au vent alignée avec et adjacente à ladite coque face au vent de la pale, de façon à fournir une coque aérodynamique continue ;
ledit composant de bord (21, 22) ayant une rigidité inférieure à celle de la structure principale (23) de la pale,
**caractérisée par le fait que**
à une position du composant de bord (21, 22), au moins une parmi ladite coque face au vent (6) et ladite coque sous le vent (7) est pliée vers l'autre, formant une surface de contact pour relier ledit composant de bord (21, 22).

2. Pale d'éolienne (1) selon la revendication 1, dans laquelle ledit longeron de bord de pale (24, 25) est destiné à supporter et transporter des charges suivant la longueur de pale vers le pied de pale.

3. Pale d'éolienne (1) selon les revendications 1 et 2, dans laquelle ledit composant de bord (21, 22) est constitué de l'un quelconque parmi un matériau en mousse, un matériau en nid d'abeilles ou une combinaison de ceux-ci.

4. Pale d'éolienne (1) selon l'une quelconque des revendications précédentes, dans laquelle ledit composant de bord (21, 22) est constitué d'un matériau à faible module d'élasticité.

5. Pale d'éolienne (1) selon l'une quelconque des revendications précédentes, dans laquelle ledit composant de bord (21, 22) a une rigidité relativement faible, et la structure principale et le système de longeron ont une rigidité relativement élevée pour transporter les principales charges de pale.

6. Pale d'éolienne (1) selon l'une quelconque des revendications précédentes, dans laquelle, à la position du composant de bord (21, 22), au moins une parmi ladite coque face au vent (6) et ladite coque sous le vent (7) est pliée vers l'autre.

7. Pale d'éolienne (1) selon l'une quelconque des revendications précédentes, dans laquelle, à la position du composant de bord (21, 22), des pliures supplémentaires de la structure de coque principale, dans la direction de corde, forment une arête (31, 32), et ledit composant de bord (21, 22) comprend un évidement (35) pour recevoir ladite arête (31, 32).

8. Pale d'éolienne (1) selon l'une quelconque des revendications précédentes, dans laquelle ledit composant de bord (21, 22) est relié audit longeron de bord (24, 25) par collage, pincement ou tout autre procédé approprié.

9. Pale d'éolienne (1) selon l'une quelconque des revendications précédentes, dans laquelle ledit composant de bord (21, 22) est une surface fermée.
